# EUROPÄISCHE PATENTSCHRIFT

(11) **EP 3 656 088 B1**
(45) Veröffentlichungstag und Bekanntmachung des Hinweises auf die Patenterteilung: **29.09.2021**
(21) Anmeldenummer: 18743753.8
(22) Anmeldetag: 17.07.2018
(51) Int. Cl.: H04L 29/08, H04L 12/24, H04L 12/18

(54) **VERFAHREN UND VORRICHTUNG ZUR KONFIGURATION VON GLEICHARTIGEN NETZWERKKOMPONENTEN SOWIE KRAFTFAHRZEUG**
METHOD AND DEVICE FOR CONFIGURING IDENTICAL NETWORK COMPONENTS, AND MOTOR VEHICLE
PROCÉDÉ ET DISPOSITIF POUR LA CONFIGURATION DE COMPOSANTS DE RÉSEAU SIMILAIRES AINSI QUE VÉHICULE À MOTEUR

(30) Priorität: 18.07.2017 DE 102017212256
(43) Veröffentlichungstag der Anmeldung: 27.05.2020
(73) Patentinhaber: Volkswagen Aktiengesellschaft, 38440 Wolfsburg (DE)
(72) Erfinder: KRIEGER, Olaf, 39291 Lostau (DE); MEIER, Alexander, 38442 Wolfsburg (DE); DICKFELD, Felix, 38440 Wolfsburg (DE)
(86) Internationale Anmeldenummer: PCT/EP2018/069399
(87) Internationale Veröffentlichungsnummer: WO 2019/016211

(56) Entgegenhaltungen:
- DE-A1-102014 225 802
- US-A1- 2004 064 559

## Beschreibung

Die Erfindung betrifft das technische Gebiet der Konfiguration von Netzwerkkomponenten. Weil die Netzwerkkomponenten gleichartig in ihrem Funktionsumfang sind, müssen sie zur Individualisierung konfiguriert werden. Die Erfindung betrifft weiterhin eine Vorrichtung zur Konfiguration von gleichartigen Netzwerkkomponenten sowie ein Kraftfahrzeug, in dem eine Vorrichtung gemäß der Erfindung integriert ist.

In modernen Fahrzeugen wird eine Vielzahl von Steuergeräten verbaut. Alleine für den Antriebstrang werden eine Anzahl Steuergeräte eingesetzt, so z.B. Motor-Steuergerät, Getriebe-Steuergerät, ESP-Steuergerät, Fahrwerk-Steuergerät und weitere. Daneben gibt es auch noch weitere Steuergeräte, die im Bereich der Fahrzeugkarosserie verbaut werden und für bestimmte Komfortfunktionen sorgen. Als Beispiele werden genannt die Tür- oder Fensterheber-Steuergeräte, Klimaanlage-Steuergeräte, Sitzverstellungs-Steuergeräte, Airbag-Steuergeräte u.a. Dann gibt es weiterhin Steuergeräte, die zu dem Infotainment-Bereich zählen, wie Kamera-Steuergeräte zur Umfeldbeobachtung, Navigationsgerät, RADAR- (Radio Detection and Ranging) oder LIDAR-Gerät (Light Detection and Ranging) zur Umfeldbeobachtung, ein Kommunikationsmodul und ein Entertainment-Gerät mit TV, Radio, Video und Musik-Funktion.

Typischerweise werden die Steuergeräte der verschiedenen Kategorien jeweils mit einem separaten, für die Gerätekategorie entsprechend ausgelegten Bus vernetzt. Es können daher mehrere verschiedene Bussysteme im Fahrzeug eingesetzt werden. Die verschiedenen Bussysteme können dabei über Gateways miteinander verbunden sein, um einen Datenaustausch zu ermöglichen. Im Bereich der Antriebstrang-Steuergeräte wird typischerweise der CAN-Bus (Controller Area Network) eingesetzt, ebenfalls im Bereich der Komfort-Steuergeräte. Im Infotainment-Bereich kommen auch andere Bussysteme zum Einsatz, wie Bussysteme die auf Ethernet-Technologie beruhen, z.B. AVB (Audio Video Bridging) der auf der Standard-Familie nach IEEE 802.3 Standard basiert. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus).

Dabei werden in einem Kraftfahrzeug vermehrt mehrere gleichartige Netzwerkkomponenten eingesetzt. Das sind in der Regel bestimmte Steuergeräte, die mit identischer Hardware und Software mehrfach im Fahrzeug verbaut werden. Beispiele derartiger Steuergeräte sind Kamera-Steuergeräte für ein Surround View System, mehrere RADAR- oder LIDAR-Geräte, eine Anzahl von Türsteuergeräten oder eine Anzahl von Sensoren wie z.B. Raddrehzahl-Sensoren. Ein Problem bei der Vernetzung von mehreren gleichartigen Netzwerkkomponenten besteht darin, dass sie an unterschiedlichen Orten im Fahrzeug verbaut werden und sie dann eine dem Ort entsprechende individualisierte Funktion ausführen sollen.

Innerhalb eines Netzwerkes dürfen jedoch keine identisch konfigurierten Netzwerkeilnehmer sein, da die Adressierungsmechanismen des Netzwerkes sonst nicht funktionieren. Im Bereich der IP-Kommunikation also einer Kommunikation die auf der Schicht des Network Layer nach ISO/OSI Referenz Modell nach dem Internet Protocol stattfindet, gibt es Mechanismen zur Netzwerk-Autokonfiguration (z.B. DHCP (Dynamic Host Configuration Protocol), oder SLAAC (Stateless Address Autoconfiguration)) wodurch Adresskonflikte vermieden werden können. Zwar werden im Kraftfahrzeug auch Ethernet-Netzwerke zur Vernetzung solcher Komponenten eingesetzt, wo solche Protokolle zur Autokonfiguration anwendbar sind, das Steuergerät weiß dadurch jedoch nicht, wo es im Fahrzeug verbaut ist. Ein Kommunikationspartner, der z.B. mit der Kamera im rechten Außenspiegel kommunizieren möchte, kennt somit nicht die Adressinformation des Teilnehmers an diesem Verbauort.

Normalerweise sind alle Ports an einem Ethernet-Switch gleichwertig, so dass es funktional keinen Unterschied macht, an welchem Port eine Komponente angeschlossen ist. Auch ist es ohne Zusatzaufwand für einen Netzwerkteilnehmer nicht möglich von einem Netzwerk-Switch zu erfahren, an welchem physikalischen Port es angeschlossen ist.

Aus der Druckschrift US 2017 / 0 033 986 A1 ist ein System und Verfahren zur Konfigurierung von gleichartigen Geräten in einem Kraftfahrzeug bekannt. Dabei wird ein Netzwerk-Switch eingesetzt, an den die Gleichteile (Sensoren) angeschlossen werden. Es wird eine Konfigurationsnachricht an den jeweiligen Sensor gesendet. Daraufhin konfiguriert sich der Sensor entsprechend der in der Konfigurationsnachricht enthaltenen Information. Die vorgeschlagene Lösung basiert auf dem Einsatz von VLAN-ID-Adressen, entsprechend virtual LAN-ID.

Aus der US 2016 / 0 352 574 A1 ist ein Verfahren zur automatischen Konfiguration von an den Anschlüssen eines Netzwerk-Switches angeschlossenen Geräten bekannt, das auf Korrelation von Geräte-Parameter-Einstellungen des Netzwerk-Switches und der angeschlossenen Geräte beruht.

Aus der US 2008 / 0 263 185 A1 ist es bekannt, basierend auf "Policy Settings" eine Konfiguration von an einen Netzwerk-Switch angeschlossenen Geräten zu machen.

Aus US 2010 / 0 205 281 A1 ist es bekannt, bei der Konfiguration von an einen Netzwerk-Switch angeschlossenen Geräten mit einem LLDP-Protokoll den physikalischen Ort festzustellen.

Aus US 2015 / 0 215 274 A1 ist ein Gerät und ein Verfahren bekannt, bei dem für ein Fahrzeug aus einer Hersteller-Fahrzeugnummer VIN eine IPv6-Adresse gebildet wird.

Aus der DE 10 2014 225 802 A1 ist ein Ethernet-Switch zur Ethernet-Kommunikation innerhalb eines Fahrzeugs bekannt. Der Ethernet-Switch weist eine Steuereinheit auf, die konfiguriert ist zum Empfangen, über die erste Ethernet-Schnittstelle, einer an mehrere, insbesondere sämtliche der Steuergeräte adressierten ersten Multicast-Nachricht von dem Nachrichtensender; und Weiterleiten der ersten Multicast-Nachricht, über die jeweiligen zweiten Ethernet-Schnittstellen, als Multicast-Nachricht und nur an jedes der durch die erste Multicast-Nachricht adressierten Steuergeräte, von denen eine Multicast-Nachrichtenart der ersten Multicast-Nachricht angebende Anmeldedaten in dem Speicher abgelegt sind.

Die Erfindung setzt sich zum Ziel eine praktikable Umsetzung für die Netzwerkkonfiguration zu finden, mit der es möglich ist, eine Netzwerkkomponente darüber zu informieren, an welchem physikalischen Port eines Netzwerk-Switches sie angeschlossen ist. Dies ist die Aufgabe der Erfindung. Dadurch erfährt die Netzwerkkomponente welche Rolle sie im Netzwerk einnehmen muss. Anschließend kann die Netzwerkkomponente die zur Rolle passende Konfiguration laden.

Diese Aufgabe wird durch ein Verfahren und eine Vorrichtung zur Konfiguration von gleichartigen Netzwerkkomponenten gemäß Anspruch 1 und Anspruch 10 , sowie ein Kraftfahrzeug gemäß Anspruch 12 gelöst.

Die abhängigen Ansprüche beinhalten vorteilhafte Weiterbildungen und Verbesserungen der Erfindung entsprechend der nachfolgenden Beschreibung dieser Maßnahmen.

Das einzige eindeutige Merkmal, an dem Gleichteil-Steuergeräte im Fahrzeug eindeutig identifiziert werden können, ist deren elektrischer Anschluss. Durch die Konstruktion des Bordnetzes (Kabelbaum des Fahrzeugs) ist genau festgelegt, mit welchen Kontakten der Steckverbindung zu einem Steuergerät eine bestimmte Netzwerkkomponente verbunden ist.

Für das Verfahren zur Konfiguration von gleichartigen Netzwerkkomponenten, die jeweils über ein Netzwerkkabel an einen physikalischen Port eines Netzwerk-Switchs angeschlossen sind, wobei wenigstens eine weitere Netzwerkstation an den Netzwerk-Switch angeschlossen ist, ist es von Vorteil, wenn von der weiteren Netzwerkstation jeweils eine Konfigurationsnachricht an eine Netzwerkkomponente versendet wird. Dabei wird durch die Konfigurationsnachricht der jeweiligen Netzwerkkomponente mitgeteilt, an welchen physikalischen Port des Netzwerk-Switch die Netzwerkkomponente angeschlossen ist. Das Verfahren kennzeichnet sich weiter dadurch aus, dass die Netzwerkkomponente daraufhin eine dem Anschluss an den physikalischen Port entsprechende Neukonfiguration hinsichtlich ihrer Funktion im Netz vornimmt. Sodann ist die Netzwerkkomponente entsprechend ihrer durch den Verbauort festgelegten Rolle konfiguriert und kann die Daten entweder mit entsprechenden Zusatzinformationen versehen oder gleich an die richtige Stelle senden, wo sie verarbeitet werden sollen. Dadurch werden auch Mehrkosten, die durch die Entwicklung und Produktion von mehreren Komponenten-Varianten entstehen vermieden. Solche Mehrkosten entstehen auch durch die Logistik (Produktion Ersatzteilgeschäft) und die Variantensteuerung (mehrere Teilenummern). Dies alles ergibt sich aus der technischen Notwendigkeit, dass alle Netzwerkteilnehmer eindeutig konfiguriert sein müssen.

In vorteilhafter Weise wird das Verfahren zur Konfiguration so gestaltet, dass, wenn der Funktionsumfang der gleichartigen Netzwerkkomponenten gleich ist, die Netzwerkkomponenten bei Anschaltung an den Netzwerk-Switch gemäß einer Standardfunktion der Netzwerkkomponente konfiguriert werden. Dann ist diese Standardfunktion zwar redundant in dem Netzwerk vorhanden, aber Verwechselungen hinsichtlich der Funktion einer Netzwerkkomponente werden vermieden.

Für das Verfahren ist es besonders vorteilhaft, wenn als Netzwerktechnologie zur Verbindung der Netzwerkkomponenten eine Variante der Ethernet-Standard-Familie zum Einsatz kommt. Im Falle einer Vernetzung der Geräte basierend auf einer Variante der Ethernet-Standard Familie ist damit den Netzwerkkomponenten durch das Verfahren bekannt, an welchem physikalischen Port eines Ethernet-Switches die Netzwerkkomponente angeschlossen ist.

Hierbei kann in vorteilhafter Weise die Variante 100BASE-T1 oder 1000BASE-T1 der Ethernet-Standard-Familie eingesetzt werden. Diese Variante wurde besonders für den Einsatz im Kraftfahrzeug entwickelt. Die Automobilindustrie hat die Bitübertragungsschicht als Kommunikationsstandard für Automotive Ethernet spezifiziert. Dieser Standard wird von der IEEE in zwei Varianten als 100BASE-T1 und als 1000BASE-T1 als Teil der Spezifikation IEEE P802.3bp veröffentlicht.

Obwohl auch Unicast-Adressen für die Adressierung der Netzwerkkomponenten bei dem Verfahren eingesetzt werden können, ist es von Vorteil, wenn zur Aussendung einer Konfigurationsnachricht eine Multicast-Zieladresse aus einem vordefinierten Subnetz-Adress-Bereich verwendet wird und die Netzwerkkomponenten so vorkonfiguriert werden, dass sie auf Nachrichten, die an eine der Multicast-Zieladressen aus dem vordefinierten Subnetz-Adress-Bereich adressiert sind, ansprechen. In einem einfachen Ethernet Netzwerk-Switch wird es schon durch die Software unterstützt bestimmte Multicast-Gruppen zu definieren. Dies kann hier in vorteilhafter Weise ausgenutzt werden.

Dabei wird der Netzwerk-Switch so konfiguriert , dass pro Multicast-Zieladresse aus dem vordefinierten Subnetz-Adress-Bereich in einer Zuordnungstabelle nur ein definierter physikalischer Port zur Weiterleitung der Nachricht, die an die jeweilige Multicast-Zieladresse adressiert ist, eingetragen wird. Es wird also für eine Individualisierung einer Netzwerkkomponente pro Multicast-Adresse eine Multicast-Gruppe mit nur einem einzigen Mitglied gebildet.

Für das Verfahren ist weiterhin von Vorteil, wenn zur Ziel-Adressierung IPv6 Adressen verwendet werden und der vordefinierte Subnetz-Adress-Bereich für die zur Konfiguration benutzten Multicast-Zieladressen aus dem bei IPv6 erlaubten Multicast-Adressen-Bereich, insbesondere bei einer Konfiguration von bis zu 16 gleichartigen Netzwerkkomponenten dem Bereich ff14::1:0/124 entspricht.

Hier ist es dann noch von Vorteil, wenn zur Quell-Adressierung IPv6 Unicast-Adressen verwendet werden und den Netzwerkkomponenten und der weiteren Netzwerkstation jeweils eine Adresse aus dem bei IPv6 erlaubten Unique Local Adressen-Bereich fc00::/7 zugewiesen wird.

Die Konfigurationsnachricht kann so ausgestaltet sein, dass darin die notwendigen Details der Konfiguration enthalten sind. In einem Anwendungsfall reicht es, wenn die Informationen bezüglich Zieladresse und die zugehörige Transport-Portnummer an die die Netzwerkkomponente nach Neukonfiguration ihre Daten senden soll sowie optional die Quelladresse, die als Absenderadresse bei der Aussendung der Daten eingetragen werden soll, in der Konfigurationsnachricht enthalten sind. Bei dieser Art der Konfiguration können beliebige Konfigurationen eingestellt werden, weil die Konfigurationsdetails mitgeliefert werden.

Dabei kann die Transport-Portnummer bei Benutzung des UDP Protokolls, entsprechend User Datagram Protcol, einer UDP Portnummer entsprechen.

In einem anderen Ausführungsbeispiel wird in der Konfigurationsnachricht der Netzwerkkomponente lediglich eine Konfigurationsnummer mitgeteilt. Die angesprochene Netzwerkkomponente führt anhand der empfangenen Konfigurationsnummer eine Neukonfiguration gemäß der in einer Tabelle unter der Konfigurationsnummer abgespeicherten Konfigurationsvariante durch. So lassen sich aber nur vordefinierte Konfigurationen einstellen.

Von Vorteil ist noch, wenn die Konfigurationsnachricht periodisch wiederholt an die jeweilige Netzwerkkomponente gesendet wird. Durch regelmäßiges Übertragen der Konfigurationsnachricht kann ein dynamisches Verhalten erreicht werden. Dadurch können Komponenten beliebig (auch im laufenden Betrieb) ausgetauscht werden. Nach kurzer Zeit stellt sich immer wieder eine funktionierende Konfiguration ein. Das ist wichtig für Reparaturzwecke bei Austausch von Ersatzteilen.

Für eine Vorrichtung, mit einer Anzahl gleichartiger Netzwerkkomponenten die jeweils über ein Netzwerkkabel an einen physikalischen Port eines Netzwerk-Switchs angeschlossen sind, wobei wenigstens ein weiterer Netzwerkknoten an den Netzwerk-Switch angeschlossen ist, die zur Durchführung des Verfahrens ausgelegt ist gelten die den oben genannten Verfahrensschritten entsprechenden Vorteile.

Dies gilt auch für ein Kraftfahrzeug, in dem eine solche Vorrichtung integriert ist.

Der Einsatz in einem Kraftfahrzeug kann in einem Beispiel so erfolgen, dass die gleichartigen Netzwerkkomponenten einer Anzahl von Kameras oder Ultraschall-Sensoren oder RADAR-Sensoren, oder LIDAR-Sensoren zur Umfeldbeobachtung oder einer Anzahl von Türsteuergeräten oder einer Anzahl von Sensoren wie Raddrehzahl-Sensoren entsprechen.

Eine Erweiterung besteht darin, dass der CAN Controller beim Senden von Nachrichten diese automatisch mit aktuellen Zeitstempeln der Netzwerkzeit versieht.

Ein Ausführungsbeispiel der Erfindung ist in den Zeichnungen dargestellt und wird nachfolgend anhand der Figuren näher erläutert.

Es zeigen:
- Fig. 1: ein Kraftfahrzeug welches mit gleichartigen Netzwerkkomponenten ausgestattet ist;
- Fig. 2: das Cockpit des in Fig. 1 dargestellten Kraftfahrzeuges;
- Fig. 3: ein Blockdiagramm für eine Vorrichtung zur Konfiguration von gleichartigen Netzwerkkomponenten;
- Fig. 4: ein erstes Beispiel einer Konfigurationsnachricht in der statt der Konfigurationsdetails eine Konfigurationsnummer einer vordefinierten Konfiguration enthalten ist;
- Fig. 5: ein zweites Beispiel einer Konfigurationsnachricht in der die Konfigurationsdetails enthalten sind; und
- Fig. 6: ein Beispiel einer Datentransportnachricht welche von einer Netzwerkkomponente nach Neukonfiguration abgesendet wird.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

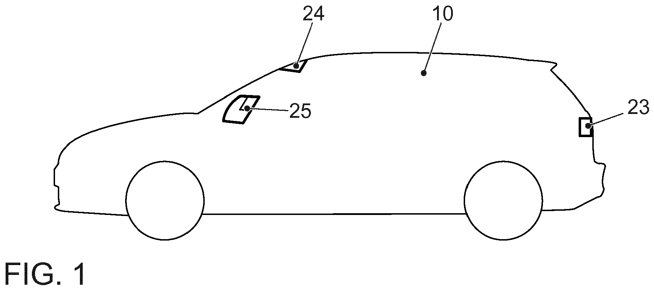

Im Folgenden wird das Verfahren der Autokonfiguration von gleichartigen Netzwerkkomponenten am Beispiel eines in einem Kraftfahrzeug eingesetzten Surround View Systems beschrieben. Damit werden alle vier Seiten des Fahrzeuges durch Kameras beobachtet. Das Kraftfahrzeug ist in Fig. 1 dargestellt und ist mit der Bezugszahl 10 versehen.

Dargestellt ist ein Personenkraftwagen Pkw. Als Fahrzeug kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Motorräder, Schienenfahrzeuge, usw. Der Einsatz der Erfindung wäre allgemein bei Landfahrzeugen, Schienenfahrzeugen, Wasserfahrzeugen und Luftfahrzeugen einsetzbar.

Mit Bezugszahl 23 ist eine Kamera bezeichnet, die ihre Funktion als Rückfahrkamera erfüllen soll. Mit der Bezugszahl 24 ist eine Kamera bezeichnet, die als Frontkamera zur Umfeldbeobachtung eingesetzt wird. Dann ist noch eine Kamera 25 im linken Außenspiegel verbaut, die die linke Seite des Fahrzeugumfeldes beobachtet. Dementsprechend ist noch eine Kamera 26 im rechten Außenspiegel verbaut (nicht dargestellt). Alle Kameras sind vom Aufbau her gleich und sind mit gleicher Hardware und Software ausgestattet. Um die Surround View Funktion zu erfüllen, wird also die Rückfahrkamera viermal zusammen mit einem zentralen Steuergerät welches die Video-Datenströme aller vier Kameras 23 - 26 empfängt und verarbeitet im Fahrzeug 10 verbaut.

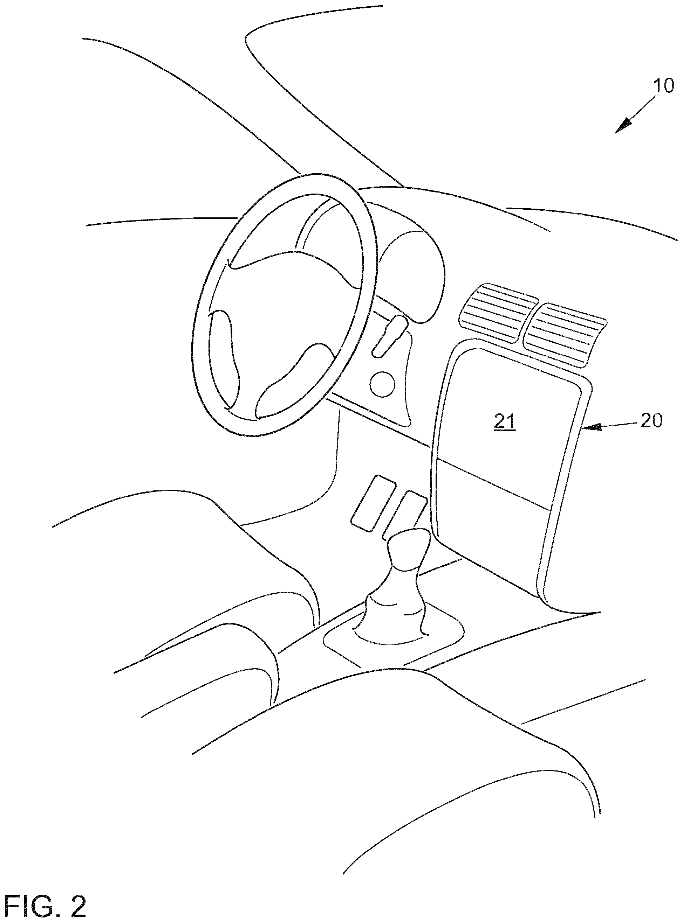

Die von den Kameras aufgenommenen Bilder werden auf der Anzeigeeinheit des Infotainment-Systems angezeigt. Fig. 2 zeigt das Cockpit des Fahrzeuges 10. Das Infotainment-System ist mit der Bezugszahl 20 bezeichnet. Die Anzeigeeinheit des Infotainment-Systems ist in der Mittelkonsole untergebracht und hat die Bezugszahl 21. Typischerweise wird die Anzeigeeinheit 21 als berührungsempfindlicher Bildschirm 21 ausgeführt und dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst werden diese Funktionen unter dem Begriff "Infotainment-System". Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort zusammengesetzt aus den Worten Information und Entertainment (Unterhaltung).

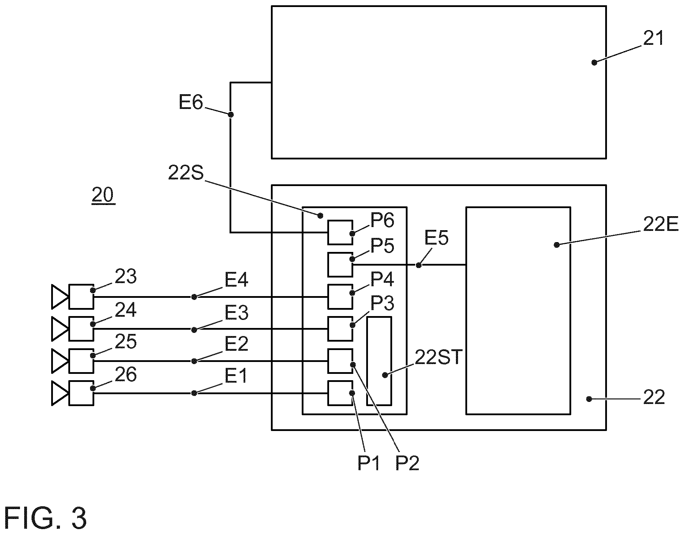

Die Fig. 3 zeigt die Komponenten, die für den Aufbau der Surround View Kamera-Funktion benötigt werden. Die vier gleichartigen Kameras sind mit den Bezugszahlen 23 - 26 versehen. Das zentrale Steuergerät, dass die einzelnen Video-Ströme von den Kameras 23-26 empfängt, hat die Bezugszahl 22. Das Steuergerät 22 bereitet in einer Recheneinheit 22E die Videobilder für die Anzeige auf der Anzeigeeinheit 21 auf. Entweder wird ein Panorama-Bild berechnet, oder die Video-Bilder werden so skaliert, dass sie in verschiedenen Segmenten auf der Anzeigeeinheit 21 angezeigt werden. Es müssen nicht immer alle vier Kamera-Ansichten angezeigt werden. Bei einem Rückfahrvorgang wird nur das Bild der Rückfahrkamera 23 angezeigt. Bei einem Ausfahrt-Vorgang aus einer Einfahrt werden nur die Bilder von Front-Kamera 24 und den Seiten-Kameras 25, 26 verarbeitet und angezeigt. Bei einem Abbiegevorgang nur die Bilder von Frontkamera 24, Rückfahrkamera 23 und der Seitenkamera der entsprechenden Seite. Hilfreich ist auch die sogenannte Top View Darstellung. Dabei werden die Kamerabilder von der Recheneinheit 22E in dem Kamera-Steuergerät 22 so umgerechnet, dass sie wie eine Rundumsicht von Oben auf das Fahrzeug erscheinen. Eine Ansicht des Fahrzeuges 10 von oben wird dabei ebenfalls eingeblendet.

Jede Kamera 23 -26 ist über ein separates Netzwerkkabel E1 bis E4 an einen Port P1 bis P4 des Netzwerk-Switch 22S angeschlossen. Dieser ist im Ausführungsbeispiel integriert in dem Kamera-Steuergerät 22. In einem anderen Beispiel könnte der Netzwerk-Switch 22S auch als separate Komponente ausgeführt sein. Für den beschriebenen Anwendungsfall reicht ein 6-Port Switch aus. Port P5 ist über das Netzwerkkabel E5 mit der Recheneinheit 22E verbunden. Schließlich ist über Port P6 und Netzwerkkabel E6 das Kamera-Steuergerät 22 mit der Anzeigeeinheit 21verbunden.

Als Netzwerk-Technologie zur Vernetzung der Komponenten 21 bis 26 wird eine Variante der Ethernet Standard-Familie eingesetzt. Dies ist besonders sinnvoll, weil es sich um die Vernetzung von Komponenten im Infotainment-Bereich handelt. In diesem Bereich gibt es fertige Übertragungsprotokolle wie IP (Internet Protocol), UDP (User Datagram Protocol), RTP (Real-Time Transport Protocol), TCP (Transmission Control Protocol) auf die zurückgegriffen werden kann. Die Ethernet-Netzwerk-Technologie entspricht weitestgehend der IEEE-Norm 802.3. Für den Einsatz dieser Technologie im Kraftfahrzeug werden besondere Varianten entwickelt. Eine dieser Varianten ist die erwähnte 100BASE-T1 Variante. Für diese Variante gibt es bereits fertige Netzwerk-Switches 22S auf die zurückgegriffen werden kann.

Wie beschrieben, sind alle vier Kameras 23 - 26 gleichartig. Das bedeutet, die konkrete Kamera 23 -26 kann fünf verschiedene Rollen einnehmen ("alleinige Rückfahrkamera", Surround View Kamera hinten, Surround View Kamera vorn, Surround View Kamera rechts, Surround View Kamera links).

Standardmäßig sind die Kameras 23 - 26 so programmiert, dass sie die Rolle "alleinige Rückfahrkamera" annehmen, wenn sie erstmalig eingeschaltet werden. Damit die Kameras 23 -26 eine andere Rolle einnehmen können, müssen sie umkonfiguriert werden. Die Konfigurationen unterscheiden sich in der Netzwerkkonfiguration (v. A. den IP-Adressen) aber auch in Kamera-spezifischen Parametern.

Die Autokonfiguration wird gemäß des vorgeschlagenen Verfahrens mit einer speziellen Verwendung von Multicast-Adressen erreicht. Die zugrundeliegende Idee besteht darin, dass in dem Ethernet-Switch 22S Multicast-Gruppen so konfiguriert werden können, das bestimmte Multicastnachrichten nur an einen einzelnen physikalischen Port P1 - P4 des Ethernet-Switch 22S weitergeleitet werden. An diesen Port ist aber nur eine Kamera angeschlossen. Dazu wird in dem Ethernet-Switch 22S eine Zuordnungstabelle 22ST installiert, in der pro verwendeter Multicast-Adresse eingetragen wird an welche Ports die Nachricht mit dieser Multicast-Adresse weitergeleitet werden soll.

An welchen physikalischen Port P1 - P4 eine Kamera 23 -26 angeschlossen ist, ist eindeutig durch das Bordnetz (den Kabelbaum) des Kfz 10 festgelegt.

Jede Kamera 24 - 26, die umkonfiguriert werden soll, erhält von dem zentralen Steuergerät 22 eine Konfigurationsnachricht, die an eine spezielle Multicastgruppe gesendet wird. Damit erfährt Netzwerkkomponente, an welchem physikalischen Port sie angeschlossen ist. Dabei besteht eine Besonderheit darin, dass bei der Bildung der Multicast-Gruppe nur ein Mitglied zugelassen wird. Dieses Mitglied entspricht genau der einen Kamera die umkonfiguriert werden soll.

Im konkreten Beispiel wird durch die Multicast Konfigurationsnachricht lediglich eine von vier hinterlegten Konfigurationen ausgewählt. Es ist auch möglich, dass über diesen Weg die komplette Konfiguration übertragen wird, so dass die Komponente nicht nur eine von mehreren vorher bekannten Konfigurationen, sondern eine beliebige Konfiguration einnehmen kann.

Im Ausführungsbeispiel wird davon ausgegangen, dass IPv6-Adressen verwendet werden. Die Erfindung könnte aber auch bei Benutzung von IPv4-Adressen realisiert werden. Die IPv6-Adressen wurden gegenüber den IPv4-Adressen von 32 Bit auf 128 Bit Länge verlängert. Deshalb wurde hier auch eine andere Schreibweise vereinbart. Die Adressen werden nicht mehr mit dreistelligen Dezimalzahlen, durch Punkt getrennt, angegeben, sondern durch vierstellige Hexadezimalzahlen getrennt durch Doppelpunkt.

Eine IPv6 Adressen wird in Hexadezimalschreibweise durch acht 16 Bit-Blöcke jeweils mit Doppelpunkt getrennt geschrieben. Zur Vereinfachung können in jedem Block die führenden Nullen weggelassen werden und ein langer Nullen-Block kann zu einem zweifachen Doppelpunkt "::" zusammengefasst werden.

Durch Präfix z.B. /124 kann wie bei IPv4 Schreibweise angezeigt werden, dass es sich nicht um eine einzelne Adresse, sondern um einen Adress-Bereich (Subnetz) handelt. Bei der Adress-Angabe ff14::1:0/124 zeigt der Präfix /124 an, dass die Subnetzmaske 124 Bit groß ist.

Innerhalb dieses Adress-Bereiches gibt es also genau 16 Adressen (128bit-124bit=4bit ^=16 Adressen).

Der ausgeschriebene Adressbereich betrifft die Adressen von
ff14:0000:0000:0000:0000:0000:0000:0001:0000 bis
ff14:0000:0000:0000:0000:0000:0000:0001:000f.

Jede der Kameras 23 - 26 soll Nachrichten auf allen 16 Multicast-Adressen empfangen können. Im betrachteten Beispiel wird Kamera 23 als Rückfahrkamera eingesetzt. Dies entspricht der Konfiguration, die sie standardmäßig sowieso einnimmt. Es ist deshalb nicht nötig, dass zu ihr eine Konfigurationsnachricht gesendet wird. In einem anderen Ausführungsbeispiel wäre es einfach auch für diese Kamera 23 eine Konfigurationsnachricht zu bilden.

Die Konfigurationsnachricht für Kamera 26 wird im Beispiel gem. Fig. 3 von dem Prozessor 22E z.B. an die Adresse ff14::1:1 (ff14:0000:0000:0000:0000:0000:0000:0001:0001) geschickt. Der Switch 22S ist über die Zuordnungstabelle 22ST so konfiguriert, dass er die Nachricht mit der Multicast-Zieladresse ff14::1:1 nur an den physikalischen Port P1 weiterleitet.

Die Konfigurationsnachricht für Kamera 25 wird von dem Prozessor 22E z.B. an die Zieladresse ff14::1:2 (ff14:0000:0000:0000:0000:0000:0000:0001:0002) geschickt. Der Switch 22S ist über die Zuordnungstabelle 22ST so konfiguriert, dass die Adresse ff14::1:2 nur an den physikalischen Port P2 weitergeleitet wird.

Die Konfigurationsnachricht für Kamera 24 wird von dem Prozessor 22E z.B. an die Zieladresse ff14::1:3 (ff14:0000:0000:0000:0000:0000:0000:0001:0003) geschickt. Der Switch 22S ist über die Zuordnungstabelle 22ST so konfiguriert, dass die Adresse ff14::1:3 nur an den physikalischen Port P3 weitergeleitet wird.

Durch die Festlegung der Multicast-Gruppen mit nur einem Mitglied wird erreicht, dass die Konfigurationsnachricht für Kamera 26 auch nur genau bei der Kamera 26 ankommt, usw.

Wie bekannt, wird in einem IPv6 Paket ebenfalls wie bei IPv4 immer die Zieladresse (Destination) und die Quelladresse (Source) angegeben. Dabei gilt für die oben genannten Konfigurationsnachrichten, dass als Quelladresse immer eine Unicast-Adresse angegeben wird. Die Source-Adressen sind allgemein immer Unicast Adressen und für den Netzwerk-Switch 22S bei dem betrachteten Ausführungsbeispiel irrelevant. Für die Konfigurationsnachrichten, die von dem Prozessor 22E gesendet werden, wird am besten immer die Quelladresse fdxx::2 eingetragen. Wobei die Angabe xx als Platzhalter für einen beliebigen Wert ist. Diese Adressen zählen zu dem Sonder-Bereich der "Unique Local Addresses" wie es bei IPv6 festgelegt ist. Der "Unique Local Addresses"-Bereich betriftt den Bereich fc00::/7 zu dem auch die Adressen fdxx::2 gehören.

Dieser Adress-Bereich ist reserviert für sogenannte "site-local addresses", das sind Adressen, die nicht in das Internet geroutet werden. Mehrere verschiedene lokale Bereiche dürfen die Adressen aus diesem Bereich benutzen ohne sich zu behindern, da sie nicht in andere Netze geroutet werden.

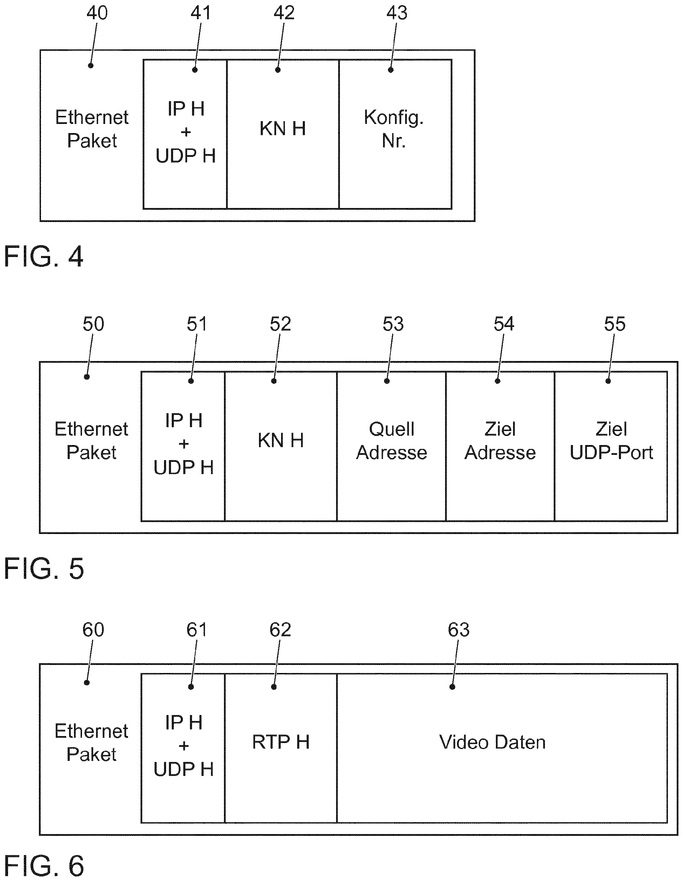

Fig. 4 zeigt jetzt den Aufbau des ersten Typs 40 einer Konfigurationsnachricht. Die Konfigurationsnachricht wird als UDP-Paket nach dem UDP-Protokoll übertragen. Das UDP-Paket wird eingebettet in ein IP-Paket, welches wiederum eingebettet ist in einem Ethernet-Paket 40, übertragen. Am Anfang des Ethernet-Datenrahmens steht der Ethernet-MAC Header dann folgt der IP Header und der UDP Header im Feld 41. Hierfür können auch zwei Felder vorgesehen sein. Im Nutzdatenfeld des UDP-Paketes folgen zwei Felder. Das Feld 42 steht für den Header der Konfigurationsnachricht. Im Feld 43 wird die Konfigurationsnummer eingetragen. Bei dem Ausführungsbeispiel werden vier verschiedene Konfigurationen unterschieden. Daher wird als Konfigurationsnummer eine Zahl von "1" bis "4" eingetragen. Davon sind vier verschiedene Konfigurationen sind in dem Speicher der Netzwerkkomponente (hier Kamera 23 - 26) beim Aufspielen der Software bereits hinterlegt worden. Bei Empfang der Konfigurationsnachricht des ersten Typs 40 (erkennbar am Konfigurationsnachricht-Header 42) wird die Konfigurationsnummer im Feld 43 extrahiert. Die zu dieser Zahl passenden Konfigurationsdetails werden aus dem Speicher geladen und die Kamera wird entsprechend eingestellt. Damit ist der Konfigurationsvorgang dann abgeschlossen. Die Kamera 24 wird so als Frontkamera konfiguriert, die Kamera 25 als Kamera Links und die Kamera 26 wird so als Kamera Rechts konfiguriert.

Fig. 5 zeigt den Aufbau des zweiten Typs 50 einer Konfigurationsnachricht. Die Konfigurationsnachricht wird ebenfalls als UDP-Paket nach dem UDP-Protokoll übertragen. Das UDP-Paket wird eingebettet in ein IP-Paket, welches wiederum eingebettet ist in einem Ethernet-Paket 40, übertragen. Teil des Ethernet-Pakets ist ein Ethernet-Datenrahmen. Im Header des Ethernet-Datenrahmens befinden sich die Empfänger MAC-Adresse (Medium Access Control) und die Sender-MAC-Adresse neben weiteren Informationen. Dann folgt im Datenfeld des Ethernet-Datenrahmens der IP Header und dann der UDP Header im Feld 51. Im Nutzdatenfeld des UDP-Paketes folgen vier Felder. Das Feld 52 steht für den Header der Konfigurationsnachricht. Im Feld 53 wird die Quell-Adresse eingetragen, die seitens der Kamera bei Aussendung ihrer Daten als Quell-Adresse eingetragen werden soll. Im Feld 54 steht die Ziel-Adresse, die seitens der Kamera bei Aussendung ihrer Daten als Ziel-Adresse eingetragen werden soll. Im Feld 55 steht noch die Ziel-UDP-Portnummer, die seitens der Kamera bei Aussendung ihrer Daten als Ziel-UDP-Portnummer eingetragen werden soll. Die Ziel-UDP-Portnummer entspricht einer Transport-Portnummer. Mit ihr wird der Empfangsstation mitgeteilt unter welchem Software-Port die Daten abgeholt werden sollen. Es sind verschiedene Portnummern auf dem Zielrechner installiert. Das Programm zur Verarbeitung der von der Kamera gelieferten Video-Daten "lauscht" auf den Ziel-Port der in der Konfigurationsnachricht des zweiten Typs 50 angegeben wurde. In einem Beispiel könnten für die verschiedenen Kameras 23 -26 die verschiedenen Ziel-Portnummern 2001 bis 2004 benutzt werden. Typischerweise wird in dem Datagramm, dass die Video-Daten enthält auch eine Quell-UDP-Portnummer angegeben, die aber nicht mit der Ziel-UDP-Portnummer übereinstimmen muss.

Fig. 6 zeigt noch den prinzipiellen Aufbau des Typs 60 eines UDP-Datagramms mit dem Video-Daten von der Kamera zu dem zentralen Kamera-Steuergerät 22 übertragen werden. Die Bedeutung der Felder 60 und 61 entspricht denen von den Feldern 40, 41 und 50, 51, wie oben erläutert. Für die Übertragung von Video-Daten ist das Real-Time Transport-Protokoll RTP geeignet. Es dient dazu, Multimedia-Datenströme (Audio, Video, Text, etc.) über Netzwerke zu transportieren, d. h. die Daten zu kodieren, zu paketieren und zu versenden. RTP ist ein Paket-basiertes Protokoll und wird normalerweise über UDP betrieben. RTP kann sowohl für Unicast-Verbindungen als auch für Multicast-Kommunikation im Internet eingesetzt werden. Im Datenfeld des UDP Paketes steht dann an erster Stelle ein RTP Header im Feld 62, gefolgt von den Video-Daten im Feld 63.

Die RTP-Pakete mit den Video-Daten werden von dem Switch 22S über den jeweiligen Port P1 - P4 empfangen und sie werden alle an den Port P5 weitergeleitet. Die Recheneinheit 22E holt die Daten an der jeweiligen Ziel-UDP-Portnummer ab, verarbeitet die Daten z.B. zu einer Rundumsicht und sendet die Video-Daten der Rundumsicht ihrerseits an die Anzeigeeinheit 21. Der Netzwerk-Switch empfängt die Daten über Port P5 und leitet sie an Port P6 weiter. Die Anzeigeeinheit 21 empfängt die Video-Daten für die Rundumsicht und zeigt sie auf dem Anzeige-Panel an. Es macht Sinn, dass zur Adressierung der Anzeigeeinheit 21 ebenfalls eine Multicast-Adresse eingesetzt wird. Sind z.B. mehrere Anzeigeeinheiten im Fahrzeug verbaut, z.B. im Cockpit und im Fond, dann kann durch Festlegung der Multicast-Gruppe leicht mehrere Adressaten für den Video-Stream definiert werden und der Video Stream muss nicht mehrfach von dem Switch weitergeleitet werden. Als Beispiel könnte der Anzeigeeinheit 21 die Multicast-Adresse ff14::5 zugewiesen werden.

Durch regelmäßiges Übertragen der Konfigurationsnachricht kann ein dynamisches Verhalten erreicht werden. Dadurch können Netzwerkkomponenten beliebig (auch im laufenden Betrieb) ausgetauscht werden. Nach kurzer Zeit stellt sich immer wieder eine funktionierende Konfiguration ein. Das ist wichtig für Reparatur und Ersatzteile.

Um ein Fehlverhalten des Netzwerkes zu vermeiden, dass dadurch entstehen kann, dass die Umschaltung in einer Netzwerkkomponente nicht funktioniert bzw. noch nicht stattgefunden hat, können falsch konfigurierte Nachrichten im Netzwerk-Switch 22S verworfen werden. In der Abbildung sind fünf Video-Stream Verbindungen erkennbar. In einem korrekt funktionierenden System, darf der Stream von Kamera 23 nur an dem physikalischen Port P4 anliegen. An allen anderen Ports P2 -P6 werden Datenpakete dieses Typs verworfen.

Im gezeigten Beispiel ist es dem Anzeigegerät 21 egal, ob es direkt mit einer Kamera verbunden ist, die sich in diesem Fall in der Standardkonfiguration "alleinige Rückfahrkamera" befindet, oder ob es mit dem optionalen Kamera-Steuergerät 22 verbunden ist, an dem vier Kameras 23 -26 angeschlossen sind. Das Kamera-Steuergerät 22 nimmt von sich aus ebenfalls die Netzwerkkonfiguration "alleinige Rückfahrkamera" ein und sorgt durch das beschriebene Verfahren dafür, dass die vier Kameras 23 - 26 jeweils in eine andere Konfiguration wechseln. Das Verhalten wird nur durch den Verbau der Komponenten bestimmt. Es ist keine weitere Konfiguration bei den Kameras 23 - 26 und dem Kamera-Steuergerät 22 notwendig.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde. Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

### Bezugszeichenliste

- 10: Fahrzeug
- 20: Infotainment-System
- 21: Infotainment-Anzeigeeinheit
- 22: Infotainment-Steuergerät
- 22E: weiterer Netzwerkknoten
- 22S: Netzwerk-Switch
- 22ST: Zuordnungstabelle
- 23: 1. Netzwerkkomponente
- 24: 2. Netzwerkkomponente
- 25: 3. Netzwerkkomponente
- 26: 4. Netzwerkkomponente
- P1: 1. Port
- P2: 2. Port
- P3: 3. Port
- P4: 4. Port
- P5: 5. Port
- P6: 6. Port
- E1: 1. Netzwerkkabel
- E2: 2. Netzwerkkabel
- E3: 3. Netzwerkkabel
- E4: 4. Netzwerkkabel
- E5: 5. Netzwerkkabel
- E6: 6. Netzwerkkabel
- 40: Konfigurationsnachricht Typ 1
- 41: IP & UDP Header
- 42: Konfigurationsnachricht Typ 1 Header
- 43: Konfigurationsnummer
- 50: Konfigurationsnachricht Typ 2
- 51: IP & UDP Header
- 52: Konfigurationsnachricht Typ 2 Header
- 53: Quell Adresse
- 54: Ziel Adresse
- 55: Transport Portnummer
- 60: Datentransportnachricht
- 61: IP & UDP Header
- 62: RTP Header
- 63: Video Daten

## Patentansprüche

1. Verfahren zur Konfiguration von gleichartigen Netzwerkkomponenten (23-26), die jeweils über ein Netzwerkkabel (E1-E4) an einen physikalischen Port (P1-P4) eines Netzwerk-Switch (22S) angeschlossen sind, wobei wenigstens eine weitere Netzwerkstation (21) an den Netzwerk-Switch (22S) angeschlossen ist, wobei von der weiteren Netzwerkstation (21) Konfigurationsnachrichten an die Netzwerkkomponenten (23-26) versendet werden, wobei zur Aussendung einer Konfigurationsnachricht eine Multicast-Zieladresse verwendet wird und die Netzwerkkomponenten (23 - 26) so vorkonfiguriert werden, dass sie auf Nachrichten, die an eine der Multicast-Zieladressen adressiert sind, ansprechen, wobei durch die Konfigurationsnachricht mit einer Konfigurationsnummer oder den Konfigurationsdetails der jeweiligen Netzwerkkomponente (23-26) mitgeteilt wird an welchen physikalischen Port (P1-P4) des Netzwerk-Switch (22S) die Netzwerkkomponente (23-26) angeschlossen ist und, dass die Netzwerkkomponente (23-26) daraufhin eine dem Anschluss an den physikalischen Port (P1-P4) entsprechende Neukonfiguration hinsichtlich ihrer Funktion im Netz vornimmt, wobei als Netzwerktechnologie zur Verbindung der Netzwerkkomponenten (23-26) eine Variante der Ethernet-Standard-Familie eingesetzt wird, **dadurch gekennzeichnet, dass** zur Multicast-Ziel-Adressierung IPv6-Adressen oder IPv4-Adressen aus einem vordefinierten Subnetz-Adress-Bereich verwendet werden und der vordefinierte Subnetz-Adress-Bereich für die zur Konfiguration benutzten Multicast-Zieladressen aus dem bei IPv6 oder IPv4 erlaubten Multicast-Adressen-Bereich stammt, und dass pro Multicast-Ziel-Adresse aus dem vordefinierten Subnetz-Adress-Bereich in einer Zuordnungstabelle (22ST) nur ein definierter physikalischer Port (P1-P4) zur Weiterleitung der Nachricht, die an die jeweilige Multicast-Zieladresse adressiert ist, eingetragen wird, so dass eine Individualisierung jeweils einer der Netzwerkkomponenten (23-26) pro Multicast-Zieladresse in einer Multicast-Gruppe mit nur einem einzigen Mitglied durchgeführt wird.

2. Verfahren nach Anspruch 1, wobei der Funktionsumfang der Netzwerkkomponenten (23-26) gleich ist und die Netzwerkkomponenten (23-26) bei Anschaltung an den Netzwerk-Switch (22S) gemäß einer Standardfunktion konfiguriert werden.

3. Verfahren nach Anspruch 1 oder 2, wobei der vordefinierte Subnetz-Adressbereich bei einer Konfiguration von bis zu 16 gleichartigen Netzwerkkomponenten, in dem Fall von IPv6- Adressen, dem Bereich ff14::1:0/124 entspricht.

4. Verfahren nach einem der vorhergehenden Ansprüche, wobei das Netzwerk zur Verbindung der Netzwerkkomponenten (23-26) einer der Varianten 100BASE-T1 und 1000BASE-T1 entsprechend der Ethernet-Spezifikation IEEE P802.3bp entspricht.

5. Verfahren nach einem der vorhergehenden Ansprüche, wobei für den Fall, dass zur Zieladressierung IPv6 Multicast-Adressen verwendet werden zur Quell-Adressierung IPv6 Unicast-Adressen verwendet werden und den Netzwerkkomponenten (23-26) und der weiteren Netzwerkstation (21) jeweils eine Adresse aus dem bei IPv6 erlaubten Unique Local Adressen-Bereich fc00::/7 zugewiesen wird.

6. Verfahren nach einem der vorhergehenden Ansprüche, wobei in den Konfigurationsdetails der Konfigurationsnachricht (50) der Netzwerkkomponente (23-26) die Zieladresse sowie die zugehörige Transport-Portnummer mitgeteilt wird, an die die Netzwerkkomponente (23-26) nach Neukonfiguration ihre Daten senden soll, sowie optional die Quelladresse die als Absenderadresse bei der Aussendung der Daten eingetragen werden soll.

7. Verfahren nach Anspruch 6, wobei die Transport-Portnummer einer Ziel UDP-Portnummer, entsprechend User Datagram Protocol, entspricht.

8. Verfahren nach einem der vorhergehenden Ansprüche, wobei die Netzwerkkomponente (23-26) anhand der Konfigurationsnummer eine Neukonfiguration gemäß der in einer Tabelle unter der Konfigurationsnummer abgespeicherten Konfigurationsvariante vornimmt.

9. Verfahren nach einem der vorhergehenden Ansprüche, wobei die Konfigurationsnachricht (50) periodisch wiederholt an die Netzwerkkomponente (23-26) gesendet wird.

10. Vorrichtung, mit einer Anzahl gleichartiger Netzwerkkomponenten (23-26), die jeweils über ein Netzwerkkabel (E1-E4) an einen physikalischen Port (P1-P4) eines Netzwerk-Switch (22S) angeschlossen sind, wobei wenigstens ein weiterer Netzwerkknoten (22) an den Netzwerk-Switch (22S) angeschlossen ist, **dadurch gekennzeichnet, dass** die Vorrichtung zur Durchführung des Verfahrens nach einem der vorhergehenden Ansprüche ausgelegt ist.

11. Vorrichtung nach Anspruch 10, wobei der Netzwerk-Switch (22S) in dem weiteren Netzwerkknoten (22) integriert ist.

12. Kraftfahrzeug, **dadurch gekennzeichnet, dass** in dem Kraftfahrzeug (10) eine Vorrichtung nach Anspruch 10 oder 11 integriert ist.

13. Kraftfahrzeug nach Anspruch 12, wobei die gleichartigen Netzwerkkomponenten (23-26) einer Anzahl von Kameras oder Ultraschall-Sensoren oder RADAR-Sensoren, entsprechend Radio Detection and Ranging oder LIDAR-Sensoren, entsprechend Light Detection and Ranging zur Umfeldbeobachtung oder einer Anzahl von Türsteuergeräten oder einer Anzahl von Sensoren wie Raddrehzahl-Sensoren entsprechen.

## Claims

1. Method for configuring identical network components (23-26) which are connected in each case via a network cable (E1-E4) to a physical port (P1-P4) of a network switch (22S), wherein at least one further network station (21) is connected to the network switch (22S), wherein configuration messages are transmitted by the further network station (21) to the network components (23-26), wherein a multicast destination address is used for the transmission of a configuration message and the network components (23-26) are preconfigured in such a way that they respond to messages which are addressed to one of the multicast destination addresses, wherein the physical port (P1-P4) of the network switch (22S) to which the network component (23-26) is connected is communicated to the respective network component (23-26) through the configuration message having a configuration number or the configuration details and that the network component (23-26) then performs a reconfiguration in respect of its function in the network according to the connection to the physical port (P1-P4), wherein a variant of the Ethernet standard family is used as the network technology to connect the network components (23-26), **characterized in that** IPv6 addresses or IPv4 addresses from a predefined subnetwork address range are used for the multicast destination addressing and the predefined subnetwork address range for the multicast destination addresses used for the configuration originates from the multicast address range permitted for IPv6 or IPv4, and **in that** only one defined physical port (P1-P4) is recorded in an assignment table (22ST) for each multicast destination address from the predefined subnetwork address range in order to forward the message which is addressed to the respective multicast destination address, such that individualization of one of the network components (23-26) is respectively carried out for each multicast destination address in a multicast group with only a single member.

2. Method according to Claim 1, wherein the functional scope of the network components (23-26) is identical and the network components (23-26) are configured according to a default function when they are connected to the network switch (22S).

3. Method according to Claim 1 or 2, wherein the predefined subnetwork address range, in the case of a configuration of up to 16 identical network components, in the case of IPv6 addresses, corresponds to the range ff14::1:0/124.

4. Method according to one of the preceding claims, wherein the network for connecting the network components (23-26) corresponds to one of the variants 100BASE-T1 and 1000BASE-T1 according to the Ethernet specification IEEE P802.3bp.

5. Method according to one of the preceding claims, wherein, if IPv6 multicast addresses are used for the destination addressing, IPv6 unicast addresses are used for the source addressing and an address from the Unique Local Address range fc00::/7 permitted for IPv6 is assigned in each case to the network components (23-26) and to the further network station (21).

6. Method according to one of the preceding claims, wherein the destination address and the associated transport port number to which the network component (23-26) is intended to transmit its data following reconfiguration, and also optionally the source address which is intended to be recorded as the sender address when the data are transmitted, communicated to the network component (23-26) in the configuration details of the configuration message (50).

7. Method according to Claim 6, wherein the transport port number corresponds to a destination UDP port number, corresponding to the User Datagram Protocol.

8. Method according to one of the preceding claims, wherein the network component (23-26) performs a reconfiguration on the basis of the configuration number according to the configuration variant stored in a table under the configuration number.

9. Method according to one of the preceding claims, wherein the configuration message (50) is transmitted in a periodically repeated manner to the network component (23-26) .

10. A device having a number of identical network components (23-26) which are connected in each case via a network cable (E1-E4) to a physical port (P1-P4) of a network switch (22S), wherein at least one further network node (22) is connected to the network switch (22S), **characterized in that** the device is designed to carry out the method according to one of the preceding claims.

11. The device according to Claim 10, wherein the network switch (22S) is integrated into the further network node (22).

12. Motor vehicle, **characterized in that** a device according to Claim 10 or 11 is integrated into the motor vehicle (10).

13. Motor vehicle according to Claim 12, wherein the identical network components (23-26) correspond to a number of cameras or ultrasound sensors or RADAR sensors, corresponding to Radio Detection and Ranging, or LIDAR sensors, corresponding to Light Detection and Ranging for environment monitoring, or to a number of door control devices or to a number of sensors such as wheel speed sensors.

## Revendications

1. Procédé de configuration de composants de réseau similaires (23-26), qui sont chacun raccordés à un port physique (P1-P4) d'un commutateur de réseau (22S) par le biais d'un câble de réseau (E1-E4), au moins une autre station de réseau (21) étant raccordée au commutateur de réseau (22S), des messages de configuration étant envoyés aux composants de réseau (23-26) par l'autre station de réseau (21), une adresse cible de multidiffusion étant utilisée pour envoyer un message de configuration et les composants de réseau (23-26) étant préconfigurés de manière à répondre à des messages qui sont adressés à l'une des adresses cible de multidiffusion, le message de configuration pourvu d'un numéro de configuration ou des détails de configuration du composant de réseau respectif (23-26) indiquant celui des ports physiques (P1-P4) du commutateur de réseau (22S) auquel le composant de réseau (23-26) est raccordé et le composant de réseau (23-26) effectuant alors, en ce qui concerne sa fonction dans le réseau, une reconfiguration qui correspond au raccordement au port physique (P1-P4), une variante de la famille de normes Ethernet étant utilisée comme technologie de réseau pour relier les composants de réseau (23-26), **caractérisé en ce que** des adresses IPv6 ou des adresses IPv4 d'une zone d'adresses de sous-réseau prédéfinie sont utilisées pour l'adressage cible de multidiffusion et la zone d'adresses de sous-réseau prédéfinie destinée aux adresses cible de multidiffusion utilisées pour la configuration proviennent de la zone d'adresses de multidiffusion autorisée avec IPv6 ou IPv4, et **en ce que** pour chaque adresse cible de multidiffusion de la zone d'adresses de sous-réseau prédéfinie dans une table d'affectation (22ST), un seul port physique défini (P1-P4) est entré pour transmettre le message adressé qui est adressé à l'adresse cible de multidiffusion respective de façon à effectuer une individualisation de l'un des composants de réseau (23-26) pour chaque adresse cible de multidiffusion dans un groupe de multidiffusion avec un seul membre.

2. Procédé selon la revendication 1, la portée fonctionnelle des composants de réseau (23-26) étant la même et les composants de réseau (23-26) étant configurés selon une fonction standard lorsqu'ils sont raccordés au commutateur de réseau (22S).

3. Procédé selon la revendication 1 ou 2, la zone d'adresses de sous-réseau prédéfinie pour une configuration jusqu'à 16 composants de réseau similaires, dans le cas d'adresses IPv6, correspondant à la zone ff14::1:0/124.

4. Procédé selon l'une des revendications précédentes, le réseau de liaison des composants de réseau (23-26) correspondant à l'une des variantes 100BASE-T1 et 1000BASE-T1 conformément à la spécification Ethernet IEEE P802.3bp.

5. Procédé selon l'une des revendications précédentes, dans le cas où des adresses de multidiffusion IPv6 sont utilisées pour l'adressage cible, des adresses d'uni-diffusion IPv6 étant utilisées pour l'adressage source et une adresse de la zone d'adresses locales uniques fc00::/7 autorisées pour IPv6 étant affectée aux composants de réseau (23-26) et à l'autre station de réseau (21).

6. Procédé selon l'une des revendications précédentes, l'adresse cible et le numéro de port de transport associé, auquel le composant de réseau (23-26) doit envoyer ses données après reconfiguration, et éventuellement l'adresse source, qui doit être entrée comme adresse d'expéditeur lors de l'émission des données, étant indiqués dans les détails de configuration du message de configuration (50) du composant de réseau (23-26).

7. Procédé selon la revendication 6, le numéro de port de transport correspondant à un numéro de port UDP cible selon le protocole de datagramme utilisateur.

8. Procédé selon l'une des revendications précédentes, le composant de réseau (23-26) effectuant, sur la base du numéro de configuration, une reconfiguration selon la variante de configuration mémorisée dans une table sous le numéro de configuration.

9. Procédé selon l'une des revendications précédentes, le message de configuration (50) étant envoyé de manière répétée périodiquement au composant de réseau (23-26).

10. Dispositif comprenant un certain nombre de composants de réseau similaires (23-26), qui sont chacun raccordés à un port physique (P1-P4) d'un commutateur réseau (22S) par le biais d'un câble réseau (E1-E4), au moins un autre nœud de réseau (22) étant raccordé au commutateur de réseau (22S), **caractérisé en ce que** le dispositif est conçu pour mettre en œuvre le procédé selon l'une des revendications précédentes.

11. Dispositif selon la revendication 10, le commutateur de réseau (22S) étant intégré dans l'autre nœud de réseau (22).

12. Véhicule automobile, **caractérisé en ce qu'**un dispositif selon la revendication 10 ou 11 est intégré dans le véhicule automobile (10).

13. Véhicule automobile selon la revendication 12, les composants de réseau similaires (23-26) correspondant à un certain nombre de caméras ou de capteurs à ultrasons ou de capteurs RADAR, correspondant à la détection et à la télémétrie radio ou à des capteurs LIDAR, correspondant à la détection et à la télémétrie de lumière pour la surveillance de l'environnement ou à un certain nombre de dispositifs de commande de porte ou un certain nombre de capteurs tels que des capteurs de vitesse de rotation de roue.
